# EUROPEAN PATENT APPLICATION

(11) **EP 4 715 544 A1**
(43) Date of publication of application: **25.03.2026**
(21) Application number: 25201541.7
(22) Date of filing: 11.09.2025
(51) Int. Cl.: G06F 3/048, G06F 3/01, G06F 3/0484, G06F 15/16, G04G 9/00, G06F 3/02, G06F 3/023, G06F 3/04847, G08C 17/00, G08C 17/02

(54) **PROGRAM, ELECTRONIC DEVICE, AND DISPLAY METHOD**

(30) Priority: 20.09.2024 JP 2024163920
(71) Applicant: Casio Computer Co., Ltd., Tokyo 151-8543 (JP)
(72) Inventor: YOSHIZAWA, Hiroaki, Tokyo, 205-8555 (JP)
(74) Representative: Plougmann Vingtoft a/s

(57) **Abstract**

A program for controlling an operation of an electronic device includes: a user interface that receives a user operation; a communication module that includes an antenna that performs wireless communication with an external device; and at least one processor that operates an own device in any of a plurality of operation modes including a first mode in which calculation is executed based on an operation to an operation unit and a second mode in which information input by an operation to the operation unit is transmitted to the external device by a communication unit, wherein the program causes the at least one processor to execute, during execution of connection processing for performing wireless communication with the external device, displaying information indicating that the electronic device is executing the connection processing in a predetermined region that displays a numerical value that is a result of the calculation in the first mode in a display unit.

## Description

### CROSS-REFERENCE TO RELATED APPLICATIONS

The present application claims priority based on Japanese Patent Application No. 2024-163920 filed on September 20, 2024, the entire contents of which are incorporated herein.

### TECHNICAL FIELD

The disclosure of the present specification relates to a program, an electronic device, and a display method.

### BACKGROUND

Techniques for notifying whether a wireless connection is established between a communication device and another device are known. For example, the reference JPA 2002-261686 describes that successful link connection of Bluetooth (registered trademark) is displayed by turning on a light emitting diode (LED) included in a communication device (for example, JPA 2002-261686).

### SUMMARY

A program for controlling an operation of an electronic device according to an embodiment of the present disclosure includes: a user interface that receives a user operation; a communication module that includes an antenna that performs wireless communication with an external device; and at least one processor that operates an own device in any of a plurality of operation modes including a first mode in which calculation is executed based on an operation to an operation unit and a second mode in which information input by an operation to the operation unit is transmitted to the external device by a communication unit, wherein the program causes the at least one processor to execute, during execution of connection processing for performing wireless communication with the external device, displaying information indicating that the electronic device is executing the connection processing in a predetermined region that displays a numerical value that is a result of the calculation in the first mode in a display unit.

### BRIEF DESCRIPTION OF THE DRAWINGS

FIG. 1 is a front view of an electronic device;
FIG. 2 is a block diagram illustrating a hardware configuration of the electronic device;
FIG. 3 is a diagram illustrating a concept of a CAL mode and a PC mode;
FIG. 4 is a diagram for explaining a process of connecting an electronic device and an external device by wireless communication;
FIG. 5 is a diagram illustrating transition of an operation state of the electronic device;
FIG. 6 is a diagram illustrating a display example of the display unit for each operation state of the electronic device;
FIG. 7 is a flowchart illustrating an example of display processing performed by the electronic device;
FIGS. 8A to 8E are schematic diagrams illustrating operation examples and display examples of the electronic device;
FIGS. 9A to 9E are schematic diagrams illustrating another operation example and display example of the electronic device;
FIG. 10 is a flowchart illustrating an example of response processing during connection processing performed by the electronic device;
FIGS. 11A to 11D are schematic diagrams illustrating operation examples and display examples of the electronic device;
FIGS. 12A to 12D are schematic diagrams illustrating other operation examples and display examples of the electronic device; and
FIGS. 13A to 13D are schematic diagrams illustrating still other operation examples and display examples of the electronic device.

### DETAILED DESCRIPTION

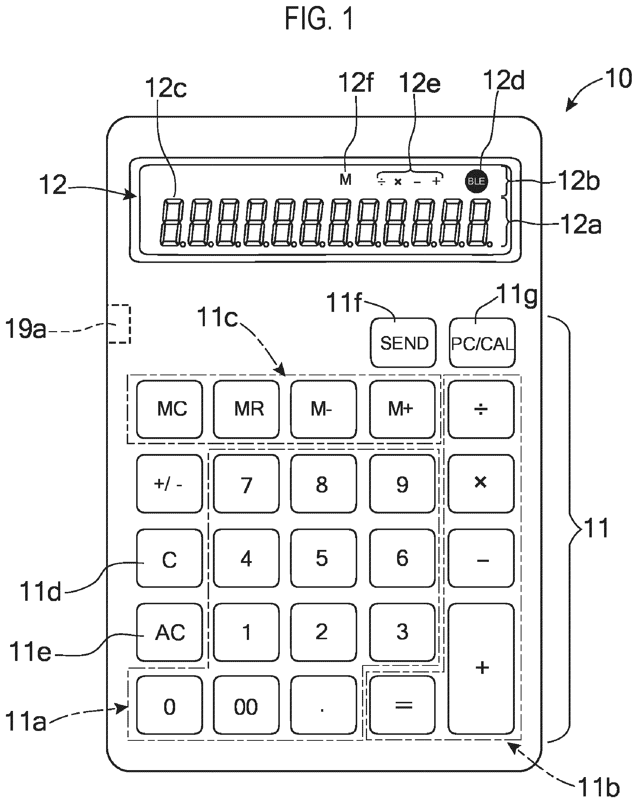

An electronic device 10 illustrated in FIG. 1 can perform mode switching on the operation mode between a calculator mode (hereinafter, referred to as a CAL mode) in a form used as a calculator for calculation and an external connection mode (hereinafter, referred to as a PC mode) in a form in which information is input to an external device by performing wireless communication with the external device (own device is not used as a calculator).

An operation unit 11 of the electronic device 10 is a portion that receives a user's operation, and includes a plurality of physical keys. A total of eleven numeric keys from "0" to "9" and "00" and a decimal point key are arranged in a numeric key region 11a of the operation unit 11. In a calculation command key region 11b of the operation unit 11, four-arithmetic-operation keys for selecting a type of arithmetic operation of addition, subtraction, multiplication, and division (+, -, ×, ÷), and an equal key for selecting completion of the arithmetic operation are arranged. In a memory key region 11c of the operation unit 11, four keys (MC, MR, M+, M-) for memory operation are arranged. The operation unit 11 further includes a clear key (C key) 11d, an all clear key (AC key) 11e, a SEND key 11f, a PC/CAL key 11g, and the like. When the electronic device 10 is used as a calculator, the number input immediately before is erased by operating the clear key 11d, and all the numbers are erased by operating the all clear key 11e. The SEND key 11f and the PC/CAL key 11g are used as operation keys related to wireless communication with an external device 18 to be described later, and constitute a setting unit for selectively setting either the CAL mode which is a first mode or the PC mode which is a second mode. Note that the operation unit 11 may include keys (for example, a function key for tax calculation, a function key for function calculation, and the like) other than the keys illustrated in FIG. 1, a slide switch other than a push-in operation type key, and the like.

A display unit 12 of the electronic device 10 is a portion that displays information, and includes a display device such as a liquid crystal display or an LED. The display unit 12 includes a first display region 12a and a second display region 12b. The first display region 12a includes a plurality of 7-segment display units 12c. In the electronic device 10, twelve 7-segment display units 12c are arranged side by side, and the first display region 12a has a display capability of 12 digits. Each of the 7-segment display units 12c has seven segments that are elongated rod-shaped display units, and can individually switch on and off of display of each segment. The display content changes depending on the combination of ON and OFF of the display of the seven segments. Specifically, the 7-segment display unit 12c can display the Arabic numerals from 0 to 9 and a part of the Latin alphabet. In the second display region 12b, marks and icons specialized for displaying specific information in the electronic device 10 are arranged. Specifically, a communication indicator 12d indicating a state of communication with or connection to an external device, a four-arithmetic-operation indicator 12e displaying operation of addition, subtraction, multiplication, and division (+, -, ×, ÷), a memory indicator 12f displaying a state of memory calculation, and the like are arranged in the second display region 12b. The second display region 12b may include display elements (marks, icons, etc.) other than the indicators illustrated in FIG. 1. In addition, although FIG. 1 illustrates a mode in which the indicators in the second display region 12b are simultaneously displayed for convenience, actually, only the indicator corresponding to the key operated by the user in the calculation command key region 11b and the memory key region 11c is displayed for the four-arithmetic-operation indicator 12e and the memory indicator 12f, and display corresponding to a communication state to be described later is performed for the communication indicator 12d. Note that the first display region 12a is an example of a predetermined region that displays a numerical value that is a result of calculation in the CAL mode described above and whose display content is variable. On the other hand, the second display region 12b is an example of a second predetermined region for displaying predetermined information (display element).

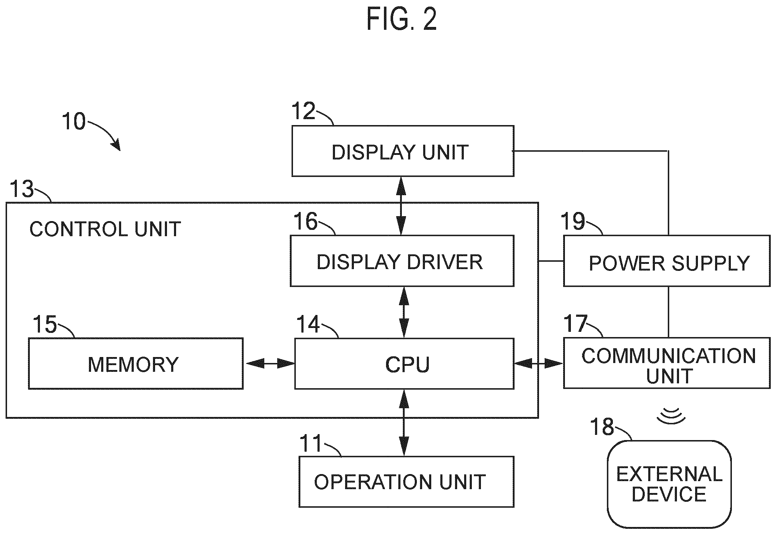

As illustrated in FIG. 2, a control unit 13 of the electronic device 10 includes a central processing unit (CPU) 14 that is a processor, a memory 15 that is a storage unit, and a display driver 16 that performs drive and display control of the display unit 12. When each key of the operation unit 11 is operated, an operation signal is input to the control unit 13. The memory 15 includes a read only memory (ROM) in which a program for controlling the electronic device 10 is stored, and a random access memory (RAM) used as a temporary data expansion area. Each unit of the electronic device 10 is controlled by reading a program stored in the ROM of the memory 15 and performing arithmetic processing by the memory 15. The display driver 16 controls the display unit 12 based on a control signal sent from the CPU 14 to perform display in the first display region 12a and the second display region 12b.

A communication unit 17 is a wireless communication module for the electronic device 10 to wirelessly communicate with another external device 18, and performs wireless communication with the external device 18. The communication unit 17 includes an antenna that performs wireless communication with an external device. The external device 18 communicating with the communication unit 17 is, for example, a personal computer, a tablet computer, a smartphone, or the like. The communication standard of the communication unit 17 exchanges a key for encryption with the external device 18 to perform encrypted data communication, and Bluetooth Low Energy (registered trademark) is applied as an example. Hereinafter, a case where the electronic device 10 uses Bluetooth Low Energy as the communication standard, that is, a case where the communication unit 17 is a communication module for Bluetooth Low Energy will be described. The external device 18 includes a communication module capable of encrypted communication with the communication unit 17.

The electronic device 10 incorporates a power supply 19, and the electronic device 10 operates by power supply from the power supply 19. The power supply 19 is a secondary battery (lithium ion battery, nickel hydrogen battery, etc.) capable of repeating charging and discharging, and can be charged by supplying power to the power supply 19 via a power supply terminal 19a (FIG. 1). In addition, the electronic device 10 may be equipped with a solar panel that converts light energy into electricity, and supply power generated by the solar panel to the power supply 19.

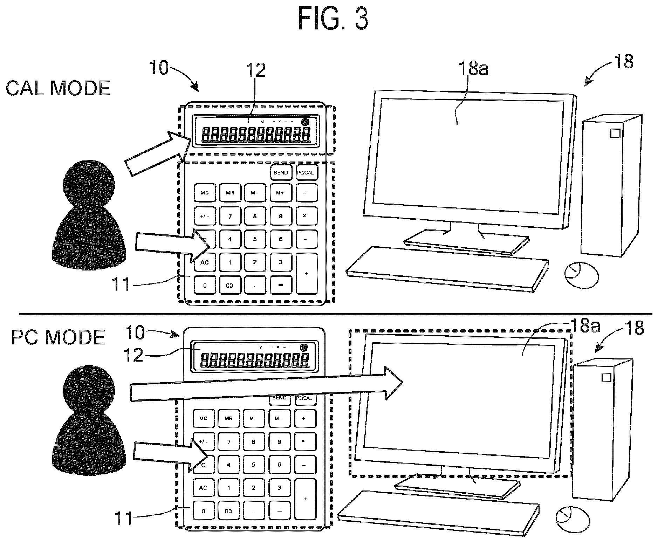

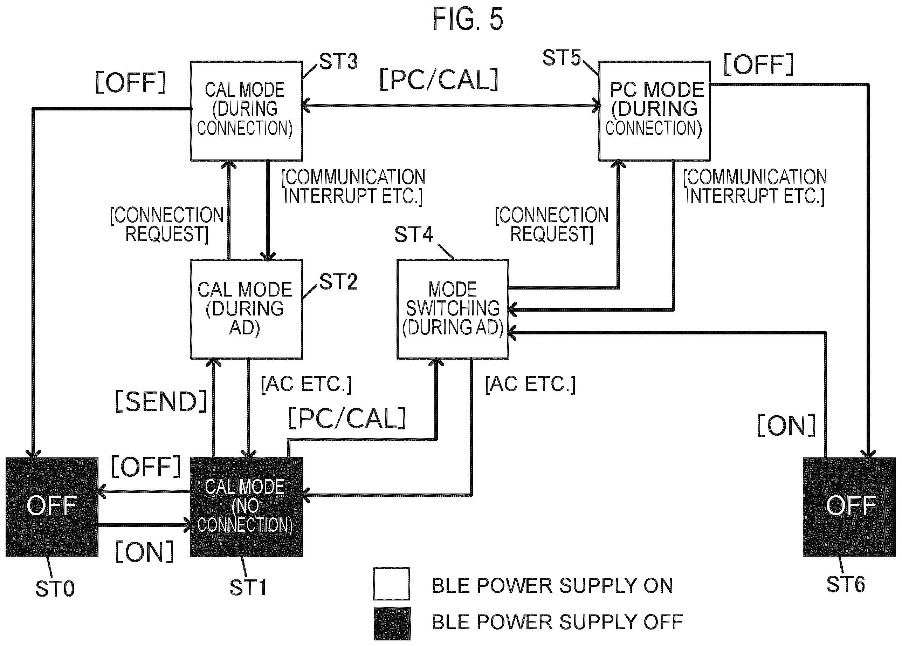

As illustrated in FIG. 3, in the CAL mode in the electronic device 10, when the user operates the operation unit 11, the electronic device 10 functions as a calculator to perform calculation or the like according to the user's operation, and the operation content (for example, a numerical value input by operating a numeric key) and the calculation result are displayed on the display unit 12. That is, the CAL mode is an example of a first mode of the electronic device 10 that executes calculation based on an operation on the operation unit 11. As will be described later, the CAL mode includes a case where the electronic device 10 functions as a standalone terminal that does not communicate with the external device 18 (CAL mode (no connection) of ST1 illustrated in FIG. 5) and a case where the electronic device 10 can communicate with the external device 18 (CAL mode (during connection) of ST3 illustrated in FIG. 5). In either case, the electronic device 10 functions as a single calculator.

In the PC mode in the electronic device 10, the electronic device 10 does not function as an independent calculator, and when the user operates the operation unit 11, a signal corresponding to the operation content is wirelessly transmitted from the electronic device 10 to the external device 18 via the communication unit 17, and reception processing of the signal is performed in the external device 18. That is, the operation unit 11 of the electronic device 10 can be used as an input operation device for the external device 18, and a result of the operation is reflected on a display unit 18a of the external device 18. In other words, the PC mode is an example of a second mode of the electronic device 10 that transmits the information input by the operation to the operation unit 11 to the external device 18 by the communication unit 17. The operation content by each key of the operation unit 11 in the PC mode is appropriately set according to the type of the operating system of the external device 18 and the application operating on the external device 18. For example, in a case where the application of the external device 18 is in a state of accepting numerical value input, when each key in the numeric key region 11a is operated by the electronic device 10 in the PC mode, numerical information corresponding to the key is input to the external device 18, and the electronic device 10 can be used as a numerical value input device (So-called ten-key device) in the external device 18. In the PC mode, a key other than the numeric key region 11a in the operation unit 11 may be used as a command key for inputting a predetermined command other than a numerical value to the external device 18. For example, the keys of the calculation command key region 11b and the memory key region 11c can function as arrow keys for cursor movement, or can function as command keys for copying and pasting a character string. The operation content input via the operation unit 11 in the PC mode and the processing content based on the operation are displayed on the display unit 18a included in the external device 18. As described above, the PC mode of the electronic device 10 is a mode in which information is input to at least the external device 18 without using the electronic device itself as a calculator.

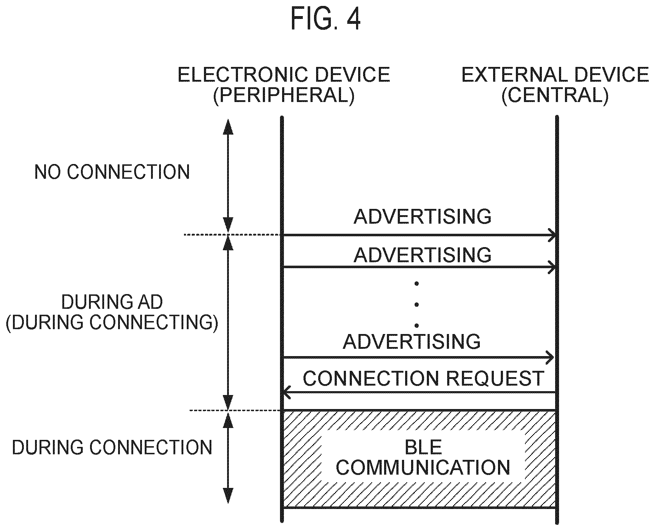

As illustrated in FIG. 4, communication between the electronic device 10 and the external device 18 is performed with the electronic device 10 as a peripheral device and the external device 18 as a central device. In a state where the communication unit 17 is powered on and the electronic device 10 and the external device 18 are not connected, the electronic device 10 advertises at a predetermined cycle. Advertising is broadcast communication in which data is transmitted from a peripheral device to an unspecified number of parties, and is a state in which the peripheral device provides its own location to a central device and waits for connection (a state in which connection is attempted). When the external device 18, which is a central device, makes a connection request to the electronic device 10 being advertised, the electronic device 10 stops advertising and switches to one-to-one communication with the external device 18.

Data communication between the electronic device 10 and the external device 18 is performed by encrypting data. In a state in which one-to-one communication is performed, pairing is performed in which a key for data encryption is exchanged between the electronic device 10 and the external device 18, and when the pairing is established, a connection state in which data communication can be performed between the electronic device 10 and the external device 18 is established. In the case of the electronic device 10 and the external device 18 having a connection record in the past, if bonding for storing the key exchanged in the previous pairing has been performed, the electronic device 10 and the external device 18 shift to a state in which encrypted communication is possible without performing the pairing processing at the time of establishment of communication.

As illustrated in FIG. 5, the electronic device 10 roughly has five operation states from ST1 to ST5. ST0 and ST6 are states in which the main power supply of the electronic device 10 is off. When the user performs an operation to turn on the main power in a state where the main power is off, the electronic device 10 is activated. The main power is turned on and off by, for example, a long press of the all clear key 11e or an operation of a power switch (not illustrated). The control unit 13 stores the operation mode when the main power of the electronic device 10 is turned off last time in the memory 15. In a case where the previous operation mode is the CAL mode, the control unit activates the electronic device 10 in the CAL mode by turning on the main power. In a case where the previous operation mode is the PC mode, the control unit activates the electronic device 10 in the PC mode by turning on the main power.

When the electronic device 10 is activated in the CAL mode by turning on the main power, the CAL mode (no connection) of ST1 is selected. In the CAL mode (no connection) of ST1, the control unit 13 continues the state in which the power supply of the communication unit 17 is off and operates the electronic device 10 in the unconnected state in which communication with the external device 18 is not performed. That is, the electronic device 10 is operated as a standalone calculator. When the user operates the SEND key 11f during the operation in the CAL mode (no connection) of ST1, the control unit 13 turns on the power of the communication unit 17 to put it into the advertising state, and transitions to the CAL mode (during AD) of ST2. The processing performed in the CAL mode (during AD) of ST2 is an example of connection processing for performing wireless communication with the external device 18, and more specifically, is an example of first connection processing. Note that the connection processing includes at least advertising, and may further include other processing (including, for example, pairing, bonding, and the like) performed to establish the connection in response to the connection request. When a connection request from the external device 18 is received in the CAL mode (during AD) of ST2 and a connection with the external device 18 (a state in which encrypted data communication is possible) is established, the mode transitions to the CAL mode (during connection) of ST3.

In a case where the user operates the operation unit 11 to input a numerical value to the electronic device 10 or cause the electronic device 10 to perform calculation in the CAL mode (no connection) of ST1, the numerical value and the calculation result (the value displayed in the first display region 12a of the display unit 12) input at the time of operating the SEND key 11f are transmitted to the external device 18 at the stage of entering the CAL mode (during connection) of ST3. When the user operates the SEND key 11f in the CAL mode (during connection) of ST3 while operating the operation unit 11 to input a numerical value to the electronic device 10 or causing the electronic device 10 to perform calculation, the numerical value input at the time of operating the SEND key 11f and the calculation result (the value displayed in the first display region 12a of the display unit 12) are transmitted to the external device 18. That is, in the CAL mode, the numerical value input in the CAL mode and the calculation result obtained in the CAL mode can be shared with the external device 18 to which the electronic device 10 is wirelessly connected by operating the SEND key 11f.

When a specific time elapses or a predetermined key operation such as the all clear key 11e is performed in the CAL mode (during AD) of ST2, the control unit 13 turns off the power of the communication unit 17 to cancel the advertising and transitions to the CAL mode (no connection) of ST1. When communication with the external device 18 is interrupted (for example, the power of the external device 18 is turned off, the distance between the electronic device 10 and the external device 18 is greatly increased, or the like) in the CAL mode (during connection) of ST3, the mode transitions to the CAL mode (during AD) of ST2.

When the user operates the PC/CAL key 11g during the operation in the CAL mode (no connection) of ST1, the control unit 13 turns on the power of the communication unit 17 to put the communication unit into the advertising state, and transitions to the mode switching state (during AD) of ST4. The processing performed in the mode switching state (during AD) of ST4 is an example of connection processing for performing wireless communication with the external device 18, and more specifically, is an example of second connection processing. In response to a connection request from the external device 18 in the mode switching state (during AD) of ST4, when connection with the external device 18 (a state in which encrypted data communication is possible) is established, the mode transitions to the PC mode (during connection) of ST5. When the user operates the PC/CAL key 11g during the operation in the CAL mode (during connection) of ST3, the mode transitions to the PC mode (during connection) of ST5. In the CAL mode (during connection) of ST3, since the connection between the electronic device 10 and the external device 18 is already established, the mode can be shifted to the PC mode (during connection) of ST5 without advertising. In this manner, it is possible to switch from the CAL mode to the PC mode according to an arbitrary operation by the user. In the PC mode (during connection) of ST5, operation content performed by the user on the operation unit 11 of the electronic device 10 is input to the external device 18, and the electronic device 10 can be used as a device for input operation of the external device 18. Further, when the user operates the PC/CAL key 11g in the PC mode (during connection) of ST5, the mode transitions to the CAL mode (during connection) of ST3.

When a specific time elapses or a predetermined key operation such as the all clear key 11e is performed in the mode switching state (during AD) of ST4, the control unit 13 turns off the power of the communication unit 17 to cancel the advertising and transitions to the CAL mode (no connection) of ST1. When communication with the external device 18 is interrupted (for example, the power of the external device 18 is turned off, the distance between the electronic device 10 and the external device 18 is greatly increased, or the like) in the PC mode (during connection) of ST5, the mode transitions to the mode switching state (during AD) of ST4.

In a case where the electronic device 10 is activated in the PC mode by turning on the main power, the control unit 13 supplies power to the communication unit 17 to turn on the power and start advertising, and performs connection with the external device 18 after setting the mode switching state (during AD) of ST4. The end of the previous use of the electronic device 10 in the PC mode means that there is a record of pairing and connection with the external device 18. Therefore, when the external device 18 is activated at this stage and can communicate with the electronic device 10, the connection between the electronic device 10 and the external device 18 is immediately established, and the electronic device 10 enters the PC mode (during connection) of ST5. However, in a state where the external device 18 is not powered on, or in a state where the electronic device 10 and the external device 18 are too far apart to communicate with each other, the PC mode is not established, and the mode transitions to the mode switching state (during AD) of ST4.

When the user performs an operation to turn off the main power while the electronic device 10 is operating in the CAL mode (ST1, ST3) or the PC mode (PT5), the control unit 13 turns off the main power of the electronic device 10. In addition, the electronic device 10 has an automatic power-off function of automatically turning off the main power after a lapse of a specific time, and when a state in which there is no input operation by the user continues for a specific time in the CAL mode (ST1, ST3) or the PC mode (PT5), the control unit 13 turns off the main power of the electronic device 10. When the main power in the CAL mode (ST1, ST3) is turned off, the power of ST0 is turned off, and when the main power in the PC mode (ST5) is turned off, the power of ST6 is turned off. The control unit 13 monitors the operation mode of the electronic device 10 when the main power is turned off, and stores in the memory 15 whether the operation mode at the time of the previous operation is the CAL mode or the PC mode. That is, when transitioning to the power-off state of ST0, information indicating that the mode has been the CAL mode at the time of the previous operation is stored in the memory 15, and when transitioning to the power-off state of ST6, information indicating that the mode has been the PC mode at the time of the previous operation is stored in the memory 15. Therefore, when the main power of the electronic device 10 is turned on, the control unit 13 can select whether to activate in the CAL mode or the PC mode by referring to the information stored in the memory 15.

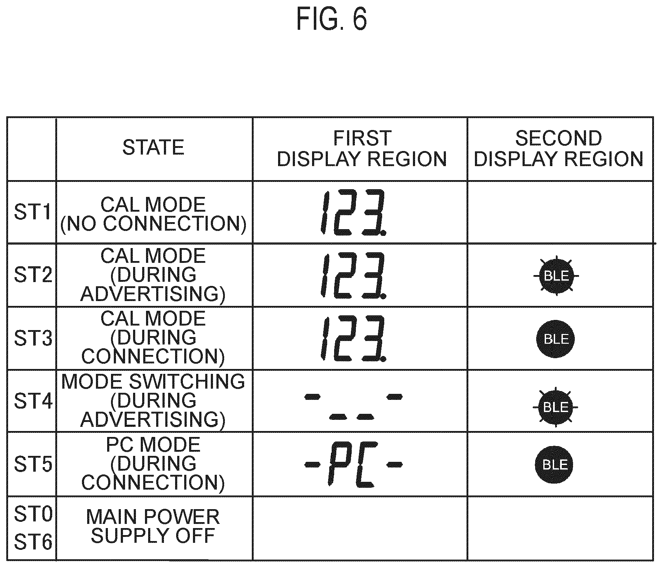

The control unit 13 causes the display unit 12 to perform display in each of ST1 to ST5 states via the display driver 16. The user can check the operation state of the electronic device 10 by viewing the display content of the display unit 12. FIG. 6 illustrates a display example of the display unit 12 in each state. In the CAL mode, a numerical value or a calculation result input by the user is displayed in the first display region 12a in any of non-connection with the external device 18 (ST1), advertising (ST2), and connection with the external device 18 (ST3). The display example of FIG. 6 illustrates a case where the respective keys "1", "2", and "3" in the numeric key region 11a are operated. During advertising (ST2, ST4), that is, during execution of the connection processing, the communication indicator 12d in the second display region 12b blinks. In the CAL mode (during AD) of ST2, the numerical value and the calculation result are displayed in the first display region 12a as described above, but in the mode switching state (during AD) of ST4, a special form of display using four 7-segment display units 12c (display in which two hyphens and two underbars are combined) is displayed in the first display region 12a. During the connection with the external device 18 (ST3, ST5), the communication indicator 12d in the second display region 12b lights up (continuously lights up). In the CAL mode (during connection) of ST3, the numerical value and the calculation result are displayed in the first display region 12a as described above, but in the PC mode (during connection) of ST5, a special form of display using four 7-segment display units 12c (display in which two hyphens and characters of a PC are combined) is displayed in the first display region 12a.

In the electronic device 10, as illustrated in the display example of ST4 in FIG. 6, the control unit 13 displays unique information ("_") indicating that the electronic device is performing the connection processing in the first display region 12a during the execution of the connection processing for performing wireless communication with the external device 18. As a result, the user can recognize that the electronic device 10 is executing the connection processing without fail. For example, when the user intentionally starts the connection processing, the operation mode of the electronic device 10 at that time is always the CAL mode, and the electronic device 10 is used as a calculator. Therefore, it is considered that the user works focusing on the display unit 12, in particular, the first display region 12a that displays a result calculated by the calculator. Therefore, by displaying unique information indicating that the connection processing is being executed in the first display region 12a, which is an existing display region of the electronic device 10, it is possible for the user to recognize that the electronic device 10 is executing the connection processing and that the connection processing has ended (due to success or failure) without overlooking the information, as compared with a case where a dedicated LED lamp or the like is provided for state display and is notified. Furthermore, for example, in a case where the connection processing is started unintentionally by the user, such as when the connection processing is started due to communication interruption or the like during the operation in the PC mode of ST5, the electronic device 10 does not normally operate as the input operation device, and thus, it is considered that the user who has recognized the fact naturally confirms the state of the electronic device 10 by shifting the line of sight from the external device 18 (display unit 18a) to the electronic device 10. Also in this case, since the information is displayed on the existing display unit 12 of the electronic device 10 that is most noticeable, in particular, on the first display region 12a, it is possible for the user to recognize the state of the electronic device 10 without missing it.

Further, in the electronic device 10, as illustrated in the display example of ST5 of FIG. 6, the control unit 13 displays unique information ("-PC-") indicating that the own device is operating in the PC mode in the first display region 12a while the own device is operating in the PC mode after the connection processing involving the mode switching of the operation mode is completed. The information displayed in the first display region 12a changes from the information ("_") indicating that the connection processing is in progress to the information ("-PC-") indicating that the electronic device 10 is operating in the PC mode, so that the user can recognize that the electronic device is operating in the PC mode without overlooking the information. In particular, since the information indicating that the connection processing is being performed and the information indicating that the operation is being performed in the PC mode partially match, it is possible to more intuitively recognize the connection (continuity) between the states. Specifically, the information displayed during the connection processing is obtained by replacing "PC" indicating a mode name among the information displayed during the operation in the PC mode with two underbars. By using such information, the user can naturally recall the state before the shift to the PC mode, and can correctly recognize the state during the connection processing of ST4 as the state before the shift to the PC mode.

Further, in the electronic device 10, as illustrated in the display examples of ST2 and ST4 of FIG. 6, when the first connection processing of ST2 without mode switching of the operation mode is started, the control unit 13 maintains the information (In this example, "123") displayed in the first display region 12a, whereas when the second connection processing of ST4 with mode switching from the CAL mode to the PC mode is started, the control unit changes the information displayed in the first display region 12a to the information ("-_-") indicating that the connection processing is being executed. As a result, while display that hinders use of the electronic device 10 as a calculator is avoided during the execution of the first connection processing of ST2 that continues to operate in the CAL mode after the connection processing, in the second connection processing of ST4 in which mode switching occurs after the connection processing, it is possible to clearly display that the mode is being switched and to cause the user to prepare for the mode after switching. Furthermore, as illustrated in the display examples of ST2 and ST4 in FIG. 6, the control unit 13 displays information (blinking display of BLE icon) indicating that the connection processing is being executed in the second display region 12b in both of the execution of the first connection processing and the execution of the second connection processing. As a result, during the execution of the connection processing without mode switching, it is possible to allow the user to recognize that the connection processing is being executed while avoiding display that hinders the use of the electronic device 10 as a calculator. Further, as illustrated in FIG. 1 and the like, the electronic device 10 is configured such that the second display region 12b is smaller than the first display region 12a, and the predetermined information displayed in the second display region 12b is smaller than the numerical value displayed in the first display region 12a. With such a relationship, it is possible to allow the user to reliably recognize the execution of the connection processing (second connection processing) accompanied by the switching of the operation mode by the display on the first display region 12a, and to allow the user to recognize the execution of the connection processing (first connection processing) not accompanied by the switching of the operation mode without disturbing the user's work by the icon displayed in the second display region 12b.

Furthermore, in the electronic device 10, as illustrated in FIG. 5, the control unit 13 turns on the power of the communication unit 17 in conjunction with the start of the connection processing from ST1, and turns off the power of the communication unit 17 in conjunction with the stop of the connection processing to return to ST1. As a result, power consumption of the electronic device 10 in the state of ST1 not requiring the communication function can be suppressed.

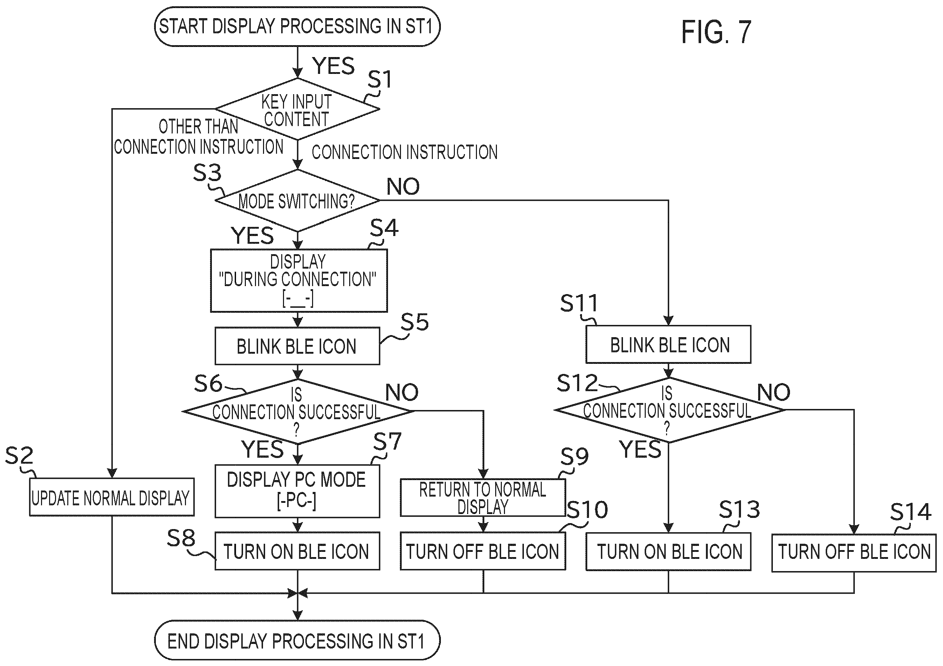

The processing illustrated in FIG. 7 is an example of the display processing performed by the control unit 13 in the CAL mode (no connection) of ST1 in the electronic device 10. The processing shown in FIG. 7 is started in the control unit 13, for example, when the CPU 14 executes a program stored in the memory 15. When the processing illustrated in FIG. 7 is started, the control unit 13 first determines the content of the key input (step S1). Here, the control unit 13 determines whether the content of the key input is a connection instruction (an instruction for connection processing for performing wireless communication with the external device 18). Specifically, the control unit 13 determines whether the key input is performed by pressing the SEND key 11f or the PC/CAL key 11g. When determining that the key input is neither the pressing of the PC/CAL key 11g nor the pressing of the SEND key 11f, and thus the key input content is other than the connection instruction (step S1: NO), the control unit 13 updates the normal display displayed in the first display region 12a (step S2), and ends the display processing illustrated in FIG. 7. That is, when an instruction other than the connection instruction is input in the CAL mode (no connection), the electronic device 10 operates as a normal calculator, and the normal display in the first display region 12a is updated according to the input operation.

When determining that the key input content is a connection instruction (YES in step S1), the control unit 13 further determines whether the connection instruction is a connection instruction accompanied by mode switching (step S3). Specifically, the control unit 13 determines whether the key input is performed by pressing the PC/CAL key 11g or pressing the SEND key 11f. When determining that the key input is performed by pressing of the PC/CAL key 11g and thus the connection instruction involves the mode switching (YES in step S3), the control unit 13 controls the communication unit 17 to start the connection processing, and after storing the information displayed in the first display region 12a in the memory 15, causes the display unit 12 to display the information indicating that the electronic device 10 is executing the connection processing started by pressing of the PC/CAL key 11g. Specifically, the control unit 13 causes a special form of display ("-_-") to be displayed in the first display region 12a (step S4), and further causes the communication indicator 12d, which is a BLE icon, to blink in the second display region 12b (step S5). That is, ST4 illustrated in FIG. 6 is displayed. Thereafter, the control unit 13 monitors the end of the connection processing (step S6). In a case where the connection processing is successful (YES in step S6), the control unit 13 causes the display unit 12 to display information indicating that the electronic device 10 is operating in the PC mode. Specifically, the control unit 13 causes the first display region 12a to display the special form of display ("-PC-") (step S7), and further lights the BLE icon (communication indicator 12d) in the second display region 12b (step S8). That is, ST5 illustrated in FIG. 6 is displayed. When the connection processing fails and is interrupted, for example, when there is no connection request during advertising (NO in step S6), the control unit 13 ends the display of the information indicating that the connection processing is in progress on the display unit 12. Specifically, the control unit 13 reads the information stored in the memory 15 before the display in step S4, returns the first display region 12a to the normal display (step S9), and further turns off the BLE icon (communication indicator 12d) in the second display region 12b (step S10). That is, ST1 illustrated in FIG. 6 is displayed. As described above, in the CAL mode (no connection), when the connection instruction involving the mode switching is input, the electronic device 10 causes the display unit 12 to display the information indicating that the own device is executing the connection processing during the execution of the connection processing, and causes the display unit 12 to display the information indicating that the own device is operating in the PC mode after the completion of the connection processing.

On the other hand, when determining that the key input is by pressing of the SEND key 11f and thus the connection instruction does not involve the mode switching (step S3NO), the control unit 13 controls the communication unit 17 to start the connection processing and causes the display unit 12 to display information indicating that the electronic device 10 is executing the connection processing. Specifically, the control unit 13 causes the communication indicator 12d, which is a BLE icon, to blink in the second display region 12b (step S11). That is, ST2 illustrated in FIG. 6 is displayed. Thereafter, the control unit 13 monitors the end of the connection processing (step S12). In a case where the connection processing has succeeded (YES in step S12), the control unit 13 causes the display unit 12 to display information indicating that the electronic device 10 is connected. Specifically, the control unit 13 turns on the BLE icon (communication indicator 12d) in the second display region 12b (step S13). That is, ST3 illustrated in FIG. 6 is displayed. In a case where the connection processing has failed (NO in step S12), the control unit 13 ends the display of the information indicating that the connection processing is in progress on the display unit 12. Specifically, the control unit 13 turns off the BLE icon (communication indicator 12d) in the second display region 12b (step S14). That is, ST1 illustrated in FIG. 6 is displayed. As described above, even when the connection instruction without mode switching is input in the CAL mode (no connection), the electronic device 10 causes the display unit 12 to display the information indicating that the own device is executing the connection processing during the execution of the connection processing, and causes the display unit 12 to display the information indicating that the own device is being connected after the connection processing is successfully completed.

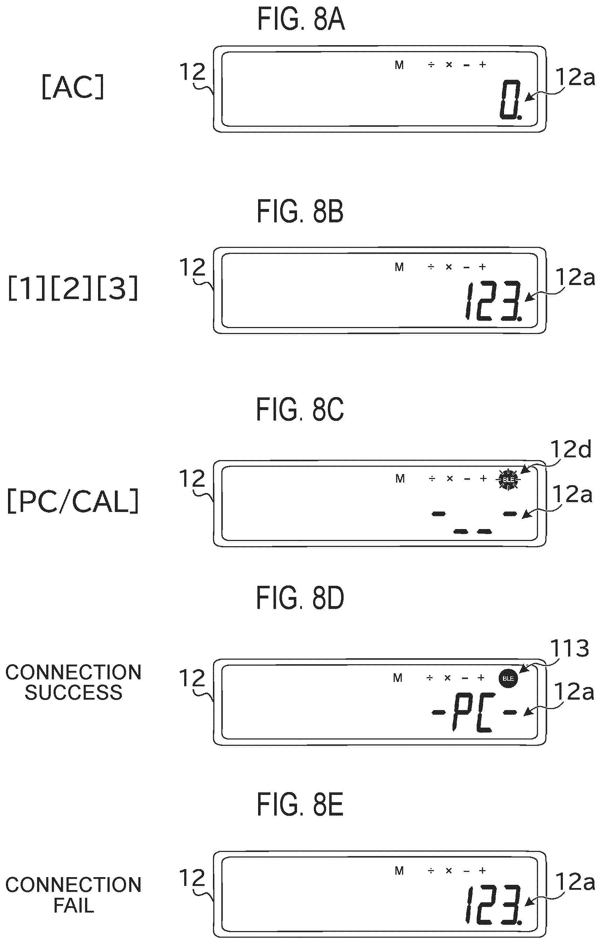

FIGS. 8A to 8E illustrate changes in display of the display unit 12 in a case where an operation of switching the electronic device 10 used in the CAL mode (no connection) of ST1 as a standalone terminal to the PC mode is performed from the middle. More specifically, FIGS. 8A to 8E illustrate cases where the user sequentially presses the all clear key 11e, "1", "2", and "3" of the numeric key region 11a, and the PC/CAL key 11g with respect to the electronic device 10 in the CAL mode (no connection). FIGS. 8A, 8B, and 8C illustrate the display unit 12 after the all clear key 11e, the [1], [2], and [3] keys of the numeric key region 11a, and the PC/CAL key 11g are pressed, respectively. FIGS. 8D and 8E illustrate the display of the display unit 12 after the success and failure of the connection processing started by pressing the PC/CAL key 11g, respectively. In the CAL mode (no connection), the display unit 12 is appropriately updated by a normal key operation such as the all clear key 11e or the numeric key. On the other hand, when a connection instruction using the PC/CAL key 11g is input, a specific change that does not appear by a normal key operation occurs in the display unit 12. That is, as illustrated in FIG. 8C, the display in the first display region 12a changes to a special form different from a normal form, and the communication indicator 12d (BLE icon) blinks in the second display region 12b. As a result, it is possible to allow the user to appropriately recognize the state without overlooking that the connection processing involving the mode switching is performed. In addition, when the connection processing is successful and the operation is started in the PC mode, as illustrated in FIG. 8D, the first display region 12a changes to the display of the special form indicating that the operation is being performed in the PC mode, and in the second display region 12b, the blinking of the communication indicator 12d ends and the communication indicator 12d is continuously lighted. By changing to the display completely different from the CAL mode in this manner, it is possible to allow the user to correctly recognize that the operation is being performed in the PC mode. Further, when the connection processing fails, the mode returns to the CAL mode (no connection), and the display of the display unit 12 also returns to the state before the start of the connection processing as illustrated in FIG. 8E. As a result, the user can be made to recognize that the mode switching is not successful and that the operation is being performed in the CAL mode.

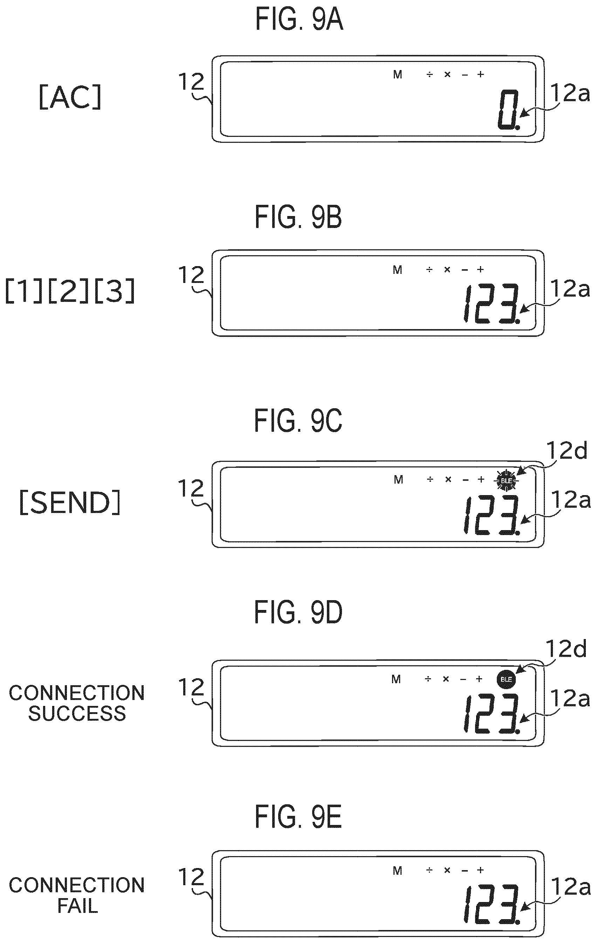

FIGS. 9A to 9E illustrate changes in display of the display unit 12 in a case where an operation of switching the electronic device 10 used in the CAL mode (no connection) of ST1 as a standalone terminal to the CAL mode (during connection) of ST3 capable of communicating with the external device 18 is performed. More specifically, FIGS. 9A to 9E illustrate cases where the user sequentially presses the all clear key 11e, "1", "2", "3" in the numeric key region 11a, and the SEND key 11f with respect to the electronic device 10 in the CAL mode (no connection). FIGS. 9A, 9B, and 9C illustrate the displays of the display unit 12 after the all clear key 11e, the [1], [2], and [3] keys of the numeric key region 11a, and the SEND key 11f are pressed, respectively. FIGS. 9D and 9E illustrate the display of the display unit 12 after the success and failure of the connection processing started by pressing the SEND key 11f, respectively. In the CAL mode (no connection), the display unit 12 is appropriately updated by a normal key operation such as the all clear key 11e or the numeric key. On the other hand, when a connection instruction using the SEND key 11f is input, the communication indicator 12d (BLE icon) blinks in the second display region 12b while the display of the first display region 12a is maintained. As a result, it is possible to allow the user to recognize that the connection processing is being executed while ensuring the display state in which the calculator function is continuously exhibited before and after the connection processing. Further, when the connection processing is successful and the CAL mode (during connection) is entered, as illustrated in FIG. 9D, the communication indicator 12d in the second display region 12b is changed from the blinking state to the continuous lighting state while the display in the first display region 12a is continuously maintained. On the other hand, when the connection processing fails and the mode returns to the CAL mode (no connection), as illustrated in FIG. 9E, the blinking of the communication indicator 12d in the second display region 12b is turned off while the display in the first display region 12a is continuously maintained. As a result, it is possible to allow the user to recognize the success or failure of the connection processing while continuously exhibiting the function of the CAL mode regardless of the success or failure of the connection processing.

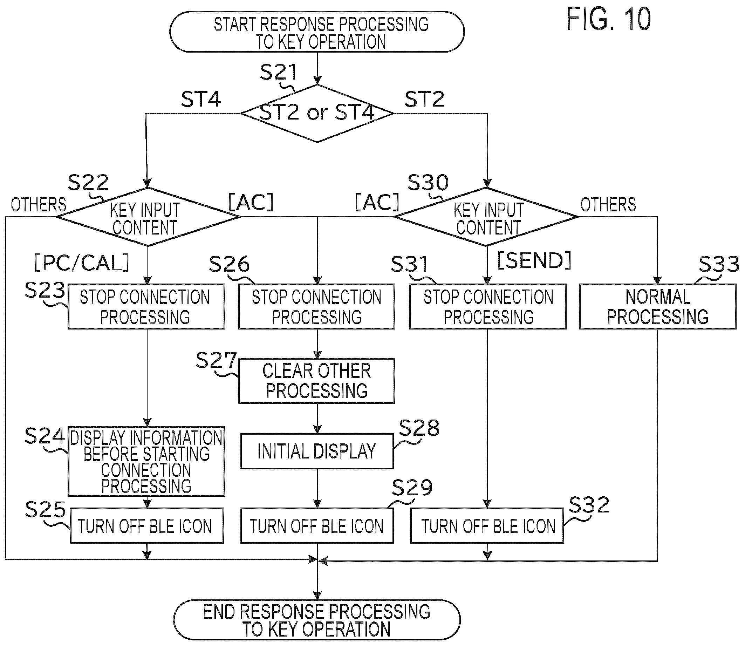

Although the connection processing and the display processing associated with the connection processing have been described above with reference to FIGS. 6 and 9A to 9E, the cancellation processing of stopping the connection processing and the display processing associated with the cancellation processing will be described below with reference to FIGS. 10, 11A to 11D, 12A to 12D, and 13A to 13D. A communication device generally has a function of stopping the connection processing in response to a key operation of a user. In a calculator such as the electronic device 10, an AC key is widely recognized as a key for stopping processing, and pressing of the AC key is a typical example of a key operation for stopping the connection processing. The electronic device 10 can also stop the connection processing by pressing the AC key. However, when the AC key is pressed, all the processes including the connection processing are canceled. Therefore, for example, in a case where only the connection instruction is desired to be canceled, such as a case where the user inputs the connection instruction by an erroneous key operation, the AC key cannot sufficiently cope with the case.

Therefore, the electronic device 10 is configured such that the control unit 13 stops the connection processing when the key operation performed by the user to start the connection processing is performed again before the connection processing is completed. As a result, even when the user inputs the connection instruction by an erroneous operation, the connection processing can be easily stopped by immediately performing the same operation, and the connection instruction input by the user can be canceled by a simple and intuitive operation. More specifically, after detecting a first operation (pressing of the PC/CAL key 11g) instructing the operation unit 11 to switch the mode from the CAL mode to the PC mode, when detecting the first operation again before completion of the connection processing for performing wireless communication with the external device 18 started by the first operation, the control unit 13 stops the started connection processing and displays the information displayed before the start of the connection processing on the display unit 12. As a result, when the PC/CAL key 11g is erroneously pressed, it is possible to stop the connection processing and return the display state to the state before the connection processing only by pressing the PC/CAL key 11g again. Therefore, the influence of erroneous operation can be suppressed.

In addition, after detecting a second operation (pressing of the SEND key 11f) instructing connection processing not involving mode switching to the operation unit 11, the control unit 13 stops the started connection processing when detecting the second operation again before completion of the connection processing for performing wireless communication with the external device 18 started by the second operation. As a result, even when the SEND key 11f is erroneously pressed, the connection processing can be stopped by simply pressing the SEND key 11f again. Further, the control unit 13 starts the connection processing while maintaining the display of the first display region 12a when detecting the second operation, and stops the connection processing while maintaining the display of the first display region 12a when detecting the second operation again before completing the connection processing. As a result, even when the SEND key 11f is erroneously pressed, the same state as that before the connection processing can be maintained after the connection processing is stopped. Therefore, the influence of erroneous operation can be suppressed. As described above, in the electronic device 10, the control unit 13 operates to cancel the immediately preceding instruction for the same key operation, so that it is possible to realize a cancel operation that is intuitive and easy for the user to use for various key operations.

The processing shown in FIG. 10 is an example of response processing performed by the control unit 13 in the electronic device 10 to a key operation performed during the connection processing, and includes cancellation processing of stopping the connection processing. The processing shown in FIG. 10 is started in the control unit 13, for example, when the CPU 14 executes a program stored in the memory 15. When the processing shown in FIG. 10 is started, the control unit 13 determines whether the state of the electronic device 10 is ST2 or ST4 (step S21). That is, it is determined whether connection processing involving mode switching of the operation mode is being executed or connection processing involving no mode switching of the operation mode is being executed. Specifically, the control unit 13 determines ST4 when the communication unit 17 is controlled by pressing the PC/CAL key 11g to start the connection processing, and determines ST2 when the communication unit 17 is controlled by pressing the SEND key 11f to start the connection processing. When determining that the communication unit 17 is controlled by pressing the PC/CAL key 11g and the connection processing is started, that is, the state is ST4, the control unit 13 further determines the content of the key input (step S22). Here, the control unit 13 determines whether the content of the key input is the all clear key 11e, the PC/CAL key 11g, or other keys.

When the key input is not the pressing of either the all clear key 11e or the PC/CAL key 11g, the control unit 13 does not accept the key input. The control unit 13 ends the processing illustrated in FIG. 10 without performing any processing. In this case, the connection processing is not stopped. When the key input is the PC/CAL key 11g, the control unit 13 controls the communication unit 17 to stop the connection processing (step S23). The control unit 13 further stops the display of the special form during the connection processing to display the information before the start of the connection processing in the first display region 12a (step S24), turns off the BLE icon (communication indicator 12d) in the second display region 12b (step S25), and ends the processing illustrated in FIG. 10. Since the information before the start of the connection processing is stored in the memory 15 in advance when the connection processing is started, the control unit 13 reads the information and displays the information in the first display region 12a. When the key input is the all clear key 11e, the control unit 13 controls the communication unit 17 to stop the connection processing and also stops other processing (step S26, step S27). The control unit 13 further stops the display of the special form in the connection processing, changes the first display region 12a to the initial display ("0") (step S28), turns off the BLE icon (communication indicator 12d) in the second display region 12b (step S29), and ends the processing illustrated in FIG. 10.

On the other hand, when determining that the communication unit 17 is controlled by pressing the SEND key 11f and the connection processing is started, that is, the state is ST2, the control unit 13 further determines the content of the key input (step S30). Here, the control unit 13 determines whether the content of the key input is the all clear key 11e, the SEND key 11f, or other keys. When the key input is neither the all clear key 11e nor the SEND key 11f pressed, the control unit 13 performs normal display processing according to the key input (step S33), and ends the processing illustrated in FIG. 10 in a state where the display has been updated. In this case, the connection processing is not stopped. When the key input is the SEND key 11f, the control unit 13 controls the communication unit 17 to stop the connection processing (step S31), turns off the BLE icon (communication indicator 12d) in the second display region 12b (step S32), and ends the processing illustrated in FIG. 10. When the key input is the all clear key 11e, it is as described above.

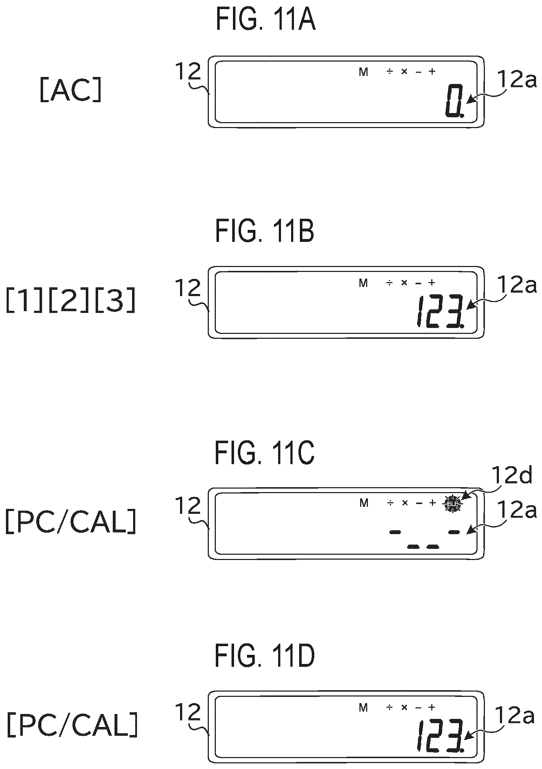

FIGS. 11A to 11D illustrate changes in display of the display unit 12 in a case where the same operation is performed again to cancel the instruction after the operation to switch the electronic device 10 used in the CAL mode (no connection) of ST1 as a standalone terminal from the middle to the PC mode is performed. More specifically, FIGS. 11A to 11D illustrate cases where the user sequentially presses the all clear key 11e, "1", "2", and "3" of the numeric key region 11a, the PC/CAL key 11g, and the PC/CAL key 11g with respect to the electronic device 10 in the CAL mode (no connection). FIGS. 11A, 11B, 11C, and 11D illustrate the displays on the display unit 12 after the all clear key 11e, the [1], [2], and [3] keys of the numeric key region 11a, the first PC/CAL key 11g, and the second PC/CAL key 11g are pressed, respectively. As illustrated in FIGS. 11B to 11D, when the connection processing started by the pressing of the PC/CAL key 11g is stopped by the pressing of the PC/CAL key 11g, the same display is performed on the display unit 12 before the start and after the stop of the connection processing in which the special form is displayed. Therefore, after canceling the connection instruction erroneously performed, the user can continue the work without particular inconvenience.

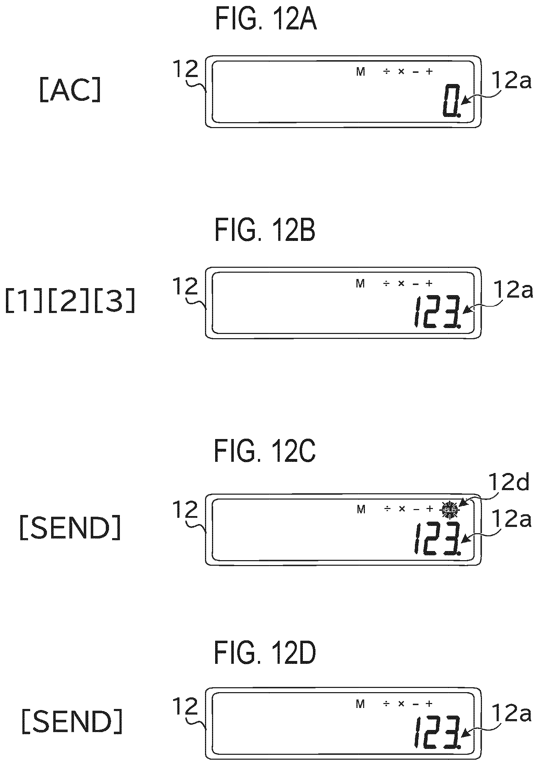

FIGS. 12A to 12D illustrate changes in display of the display unit 12 in a case where an instruction is canceled by performing the same operation again after the operation of switching the electronic device 10 used as a standalone terminal in the CAL mode (no connection) to the CAL mode (during connection) communicable with the external device 18 is performed. More specifically, FIGS. 12A to 12D illustrate cases where the user sequentially presses the all clear key 11e, "1", "2", and "3" of the numeric key region 11a, the SEND key 11f, and the SEND key 11f with respect to the electronic device 10 in the CAL mode (no connection). FIGS. 12A, 12B, 12C, and 12D illustrate the displays on the display unit 12 after the all clear key 11e, the [1], [2], and [3] keys of the numeric key region 11a, the first SEND key 11f, and the second SEND key 11f are pressed, respectively. As illustrated in FIGS. 12B to 12D, when the connection processing started by the pressing of the SEND key 11f is stopped by the pressing of the SEND key 11f, the display in the first display region 12a is always maintained. Therefore, also in this case, after canceling the connection instruction erroneously performed, the user can continue the work without particular inconvenience.

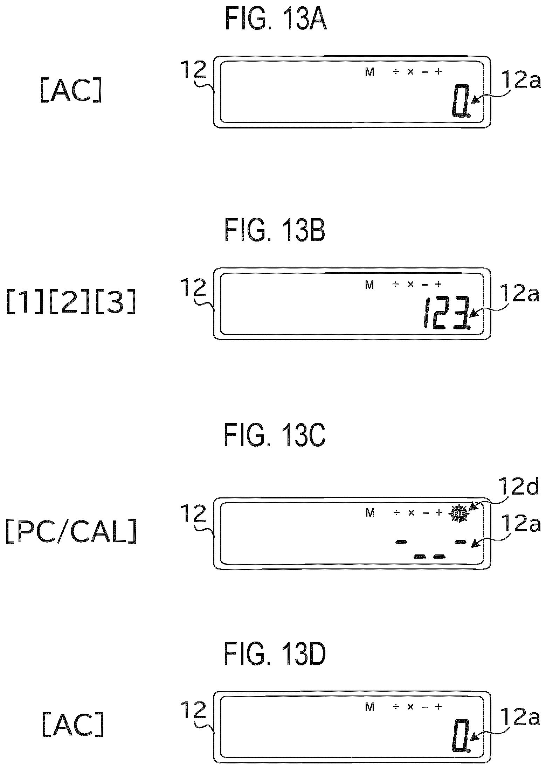

FIGS. 13A to 13D illustrate changes in display of the display unit 12 in a case where the instruction is canceled by pressing the all clear key 11e after the operation of switching the electronic device 10 used as a standalone terminal in the CAL mode (no connection) to the PC mode is performed from the middle. More specifically, FIGS. 13A to 13D illustrate cases where the user sequentially presses the all clear key 11e, "1", "2", and "3" of the numeric key region 11a, the PC/CAL key 11g, and the all clear key 11e with respect to the electronic device 10 in the CAL mode (no connection). FIGS. 13A, 13B, 13C, and 13D illustrate the displays on the display unit 12 after the all clear key 11e, the [1], [2], and [3] keys of the numeric key region 11a, the PC/CAL key 11g, and the all clear key 11e are pressed, respectively. As illustrated in FIGS. 13B to 13D, in a case where the connection processing started by pressing the PC/CAL key 11g is stopped by pressing the all clear key 11e before the connection processing is completed, after the connection processing is stopped, the same display as that before the start of the connection processing is not performed on the display unit 12, and the initial display ("0") is performed. Therefore, it is particularly effective in a case where it is desired to reset not only the connection instruction erroneously performed but also all the processing and start the work again from the beginning.

The above-described embodiment has been given as a specific example to facilitate understanding of the invention, and the present invention is not limited to the above-described embodiment, and should be understood as including various modifications and alternative embodiments of the above-described embodiment.

In the above-described embodiment, an example in which the electronic device operates in either the CAL mode or the PC mode has been described, but the electronic device may operate in still another operation mode. That is, the electronic device may operate in any of a plurality of operation modes including at least the CAL mode and the PC mode, and the control unit 13 may operate the electronic device 10 in any of the plurality of operation modes. Furthermore, in the above-described embodiment, an example in which the operation unit 11 of the electronic device 10 includes a plurality of physical keys has been described. However, the display unit 12 only needs to be able to receive an operation of a user, and may be configured by a software key instead of the physical keys.

In the above-described embodiment, the example in which the control unit 13 displays the information indicating that the connection processing is being executed in the first display region 12a during the execution of the connection processing involving mode switching has been described. However, the information indicating that the connection processing is being executed may be displayed in the first display region 12a during the execution of the connection processing regardless of whether the mode switching is involved. Whether to display information indicating that the connection processing is being executed in the first display region 12a during execution of the connection processing without mode switching may be changeable by setting. Furthermore, in the above-described embodiment, an example has been described in which, when the control unit 13 detects the same operation again after the operation detection for instructing mode switching and before the completion of the connection processing started by the operation, the information displayed before the start of the connection processing is displayed on the display unit in addition to the stop of the connection processing. However, as long as the connection processing is appropriately stopped, the processing of displaying the information displayed before the start of the connection processing may not be necessarily performed. When detecting the operation instructing the mode switching again, for example, the control unit 13 may perform another display indicating that the connection processing is stopped, and may restore only the information displayed in the first display region 12a among the information displayed on the display unit before the start of the connection processing.

Although the example in which the electronic device 10 includes the display unit 12 has been described in the above-described embodiment, the display unit 12 may be any device as long as it displays the calculation result and the like in the first mode, and may be, for example, another device (display device) connected to the electronic device 10.

The electronic device 10 according to the above embodiment functions as a calculator in the first mode, but the electronic device to which the present invention is applied is not limited to a calculator. Any device may be used as long as the device operates as an input device by being connected to the external device 18. For example, the electronic device 10 may be a smartphone or the like that can be used by switching between a first mode of operating as a normal smartphone and a second mode of operating as an input device to the external device 18.

## Claims

1. A program for controlling an operation of an electronic device including:
a user interface that receives a user operation;
a communication module that includes an antenna that performs wireless communication with an external device; and
at least one processor that operates an own device in any of a plurality of operation modes including a first mode in which calculation is executed based on an operation to an operation unit and a second mode in which information input by an operation to the operation unit is transmitted to the external device by a communication unit, wherein
the program causes the at least one processor to execute, during execution of connection processing for performing wireless communication with the external device, displaying information indicating that the electronic device is executing the connection processing in a predetermined region that displays a numerical value that is a result of the calculation in the first mode in a display unit.

2. The program according to claim 1, wherein
the program causes the at least one processor to execute:
maintaining information displayed in the predetermined region in response to first connection processing as the connection processing without mode switching of the operation mode being started; and
in response to second connection processing as the connection processing involving the mode switching from the first mode to the second mode being started, changing information displayed in the predetermined region to information indicating that the connection processing is being executed.

3. The program according to claim 2, wherein
the program causes the at least one processor to execute, after the second connection processing is completed, displaying, in the predetermined region, information indicating that the own device is operating in the second mode while the own device is operating in the second mode.

4. The program according to claim 3, wherein
the program causes the at least one processor to execute partially matching information indicating that the connection processing is being performed with information indicating that the own device is being performed in the second mode.

5. A display method performed by an electronic device, comprising:
operating in one of a plurality of operation modes including a first mode in which calculation is executed based on an operation to an operation unit that receives a user operation and a second mode in which information input by an operation to the operation unit is transmitted to an external device; and
during execution of connection processing for performing wireless communication with the external device, displaying information indicating that the connection processing is being executed in a predetermined region that displays a numerical value that is a result of the calculation in the first mode in a display unit.

6. An electronic device comprising:
a user interface that receives a user operation;
a communication module that includes an antenna that performs wireless communication with an external device; and
at least one processor that operates an own device in any of a plurality of operation modes including a first mode in which calculation is executed based on an operation to an operation unit and a second mode in which information input by an operation to the operation unit is transmitted to the external device by a communication unit, wherein
during execution of connection processing for performing wireless communication with the external device, the at least one processor displays information indicating that the own device is executing the connection processing in a predetermined region that displays a numerical value that is a result of the calculation in the first mode in a display unit.
